# EUROPÄISCHE PATENTANMELDUNG

(11) **EP 1 284 455 A2**
(43) Veröffentlichungstag der Anmeldung: **19.02.2003**
(21) Anmeldenummer: 02102006.0
(22) Anmeldetag: 05.07.2002
(51) Int. Cl.: G06F 9/46, H04L 29/06

(54) **Hardware-Modul zu Ausbau von Endgeräten zu Ad-hoc-Netzwerkfähigen Geräten**

(30) Priorität: 03.08.2001 DE 10138263
(71) Anmelder: SIEMENS AKTIENGESELLSCHAFT, 80333 München (DE)
(72) Erfinder: Frank, Michael, Dr., 81371 München (DE); Rieken, Ralf, Dr., 81541 München (DE)

(57) **Zusammenfassung**

Die Erfindung betrifft ein Hardware-Modul (1) zur Einbindung eines elektronischen Gerätes in ein Ad-hoc-Netzwerk, welches sich dadurch auszeichnet, dass das Hardware-Modul (1) ein Mittel zum Betrieb einer Java RMI und Jini unterstützenden Java Virtuellen Maschine (3), mindestens ein Interface (7-11) zu einer Kommunikationsschnittstelle des elektronischen Gerätes, Mittel zur Generierung von Jini-Diensten (6) mit Interface-stubs (4) zur Hardware des elektronischen Gerätes und mindestens eine Schnittstelle (13-16) zu einem lokalen Netzwerk aufweist.

## Beschreibung

Die Erfindung betrifft ein Hardware-Modul zur Einbindung von elektronischen Geräten in ein Ad-hoc-Netzwerk.

Es ist bekannt, daß Netzwerke heutzutage in der Regel zentral administriert werden. Fügt man ein neues Netzelement hinzu, so muß sichergestellt sein, daß es sich mit den bereits vorhandenen Netzelementen "versteht", also die richtige Schnittstelle zum Netz und die richtigen Treiber hat. Ein Schritt in der Entwicklung der Netzwerke ist daher die Weiterentwicklung des sogenannten "Plug & Play" in Form der sogenannten Ad-hoc-Netzwerke. Eine Beschreibung dieses neuartigen Netztyps, der in der Zukunft sicher an Bedeutung gewinnen wird, findet sich beispielsweise in dem Artikel "Geistreiche Verbindungen, Intelligente Geräte in dezentralen Netzen". Eine spezielle Ausbildung eines Ad-hoc-Netzwerkes ist das Jini™, dessen Architektur und Mechanismen in dem Technical White Paper "Jini™ Architectural Overview" von Sun Microsystems beschrieben sind. Der Offenbarungsgehalt dieser Veröffentlichung, insbesondere bezüglich der Ausgestaltung der Jini™-Middleware, wird hiermit in den Offenbarungsgehalt dieser Anmeldung übernommen.

Ad-hoc-Netze, wie das von Jini™, zeichnen sich dadurch aus, daß Netzelemente, und damit auch die von ihnen angebotene Dienste, beliebig in ein Netz eingefügt und wieder aus diesem entfernt werden können.

Unter Diensten versteht man hier allgemein eine Instanz, die von einer Person, einem Programm oder einem anderen Dienst benutzt werden kann. Es kann sich um Hardware, Software, Filter, einen Kommunikationskanal, Speicherplatz und vieles andere mehr handeln. Zur Durchführung eines Auftrags können viele einzelne Dienste erforderlich sein.

Die zentrale Steuerung wird durch sogenannte Schwarze Bretter (Blackboards) übernommen. Netzelemente können dem schwarzen Brett ihre Existenz und ihre Fähigkeiten mitteilen (Join) und nach Diensten suchen, die Fähigkeiten anbieten können (lookup, discovery). Für die Benutzung der Dienste wird ein Leasing-Mechanismus angeboten, hier wird zwischen den beteiligten Instanzen eine Benutzungsdauer vereinbart, nach deren Ablauf die Ressourcen des benutzten Dienstes wieder freigegeben werden.

Die Kommunikation zwischen Diensten kann mittels Java Remote Method Invocation (RMI™) erfolgen.

Das Problem des Standes der Technik besteht nun darin, daß gängige Hardware, wie beispielsweise PDA's, digitale Kameras, Notebooks oder Handys, in der Regel zwar über externe Schnittstellen verfügen, jedoch nicht in der Lage sind, die Mechanismen von Jini zu verarbeiten und sich damit auch nicht ohne weiteres in lokale Ad-hoc-Netzwerkes einbinden können.

Es ist daher Aufgabe der Erfindung, ein Hardware-Modul darzustellen, mit welchem es den vorhandenen elektronischen Geräten ermöglicht wird, ohne selbst Jini-Mechanismen zu verarbeiten, über die eigene lokale Schnittstelle in ein lokales Ad-hoc-Netzwerk eingebunden zu werden.

Diese Aufgabe wird durch die Merkmale des Patentanspruches 1 gelöst. Vorteilhafte Weiterbildungen der Erfindung sind Gegenstand untergeordneter Ansprüche.

Entsprechend dem Erfindungsgedanken schlagen die Erfinder ein Hardware-Modul zur Einbindung eines elektronischen Gerätes in ein Ad-hoc-Netzwerk vor, welches ein Mittel zum Betrieb einer Java RMI und Jini unterstützenden Java Virtuellen Maschine aufweist, mindestens ein Interface zu einer Kommunikationsschnittstelle des elektronischen Gerätes, Mittel zur Generierung von Jini-Diensten mit Interface-stubs (Interface-stub = eigenständige Interface-Software, auch Skeleton genannt) zur Hardware des elektronischen Gerätes und mindestens eine Schnittstelle zu einem lokalen Netzwerk aufweist.

Im Gegensatz zum klassischen Proxy-Ansatz löst also die Erfindung das Problem der Anbindung von Endgeräten, die Jini per se nicht unterstützen können, durch eine generische Hardware mit einem simplen plug-and-play, indem bereits existierende generische Interfaces zu den elektronischen Geräten mit den Anforderungen der Jini-Middleware in einer neuen Hardware kombiniert werden.

Eine vorteilhafte Ausbildung des erfindungsgemäßen Hardware-Moduls sieht vor, dass ein Lookup-Service integriert ist, der über einen Schalter am Hardware-Modul aktiviert werden kann um die Verbindung zu einem lokalen Netzwerk aufzubauen. Ein Lookup-Service ist ein Jini-Dienst des Schwarzen Brettes, welcher als zentraler Bootstrapping-Mechanismus aufgebaut ist und dazu dient den Kontakt zwischen einem Nutzer des Netzwerkes und dem Netzwerk herzustellen. Ausführlich wird dies beispielsweise in "Jini™ Achitectural Overview", Technical White Paper von SUN Microsystems beschrieben.

In vorteilhaften Ausgestaltungen des Hardware-Moduls wird vorgeschlagen, dass das Interface zur Kommunikationsschnittstelle des angeschlossenen elektronischen Gerätes zu verschiedenen Schnittstellen kompatibel ausgeführt sein soll, wie beispielsweise zu einer USB-Schnittstelle, für die Anwendung im PC-Bereich, zu einer HAVi-Schnittstelle (HAVi=Home Audio Video Interface), für die Integration von Audio-/Videogeräten oder zu einer Instabus-Schnittstelle (Instabus = Installationsbus), um eine Integration in die Gebäudeautomatisation zu ermöglichen.

Des weiteren werden auch Schnittstellen zu Telekommunikations-Endgeräten vorgeschlagen, die den bekannten AT-Befehlssatz unterstützen.

Eine weitere Variante kann darin bestehen, dass das Interface kompatibel zum PCMCIA-Standard ausgeführt oder auch kompatibel zu einer SIM-Karte gestaltet ist.

In einer weiteren Ausführung des erfindungsgemäßen Hardware-Moduls schlagen die Erfinder vor, dass die Schnittstelle zum lokalen Netzwerk sowohl drahtlos als auch mit galvanischer Kopplung ausgeführt sein kann. Bei einer galvanischen Kopplung kann beispielsweise ein Anschluss an ein lokales Ethernet oder sonstige physische lokale Netzwerke, wie zum Beispiel in Token Ring - oder ATM-Netzwerken, vorgenommen werden. Andererseits kann eine Infrarot-Verbindung über eine IrDa-Schnittstelle, oder eine lokale Funkverbindung über eine Bluetooth-Schnittstelle oder eine IEEE 802.11 WLAN-Schnittstelle zu einem lokalen Netz hergestellt werden.

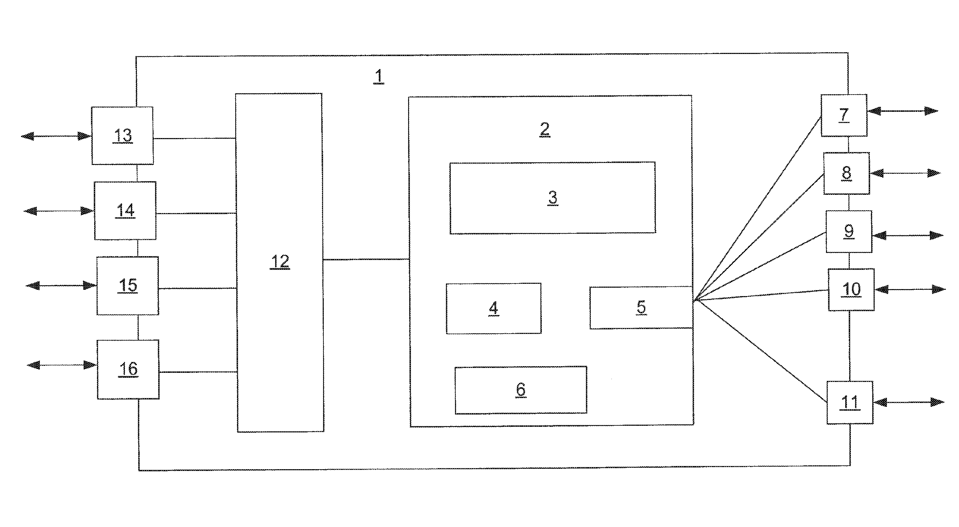

Im folgenden wird die Erfindung anhand eines bevorzugten Ausführungsbeispieles mit Hilfe der einzigen Figur 1 näher beschrieben.
- Figur 1:: Erfindungsgemäßes Hardware-Modul zur Einbindung in ein Ad-hoc-Netzwerk.

In der Figur 1 ist in schematischer Weise ein erfindungsgemäßes Hardware-Modul 1 dargestellt, welches auf der rechten Seite über die beispielhaft dargestellten Schnittstellen für elektronische Geräte verfügt. Die Schnittstelle 7 stellt einen USB-Anschluß dar, während die Schnittstelle 8 einen HAVi-Anschluß zu einem Audio-/Videogerät darstellt. Darunter ist mit dem Bezugszeichen 9 ein Instabus zu einer Gebäudeautomatisation gezeigt und darunter eine einfache und universelle RS232-Schnittstelle 10. Ganz unten ist ein Interface 11 zu einem Telekommunikationsendgerät mit einem AT-Befehlssatz dargestellt. Der Informationstransfer über die Schnittstellen 7 bis 11 wird zur Java Virtuellen Maschine 2 geleitet, in der sich ein Adapter 5 mit angeschlossenen Interface-stubs befindet. In die Java Virtuelle Maschine 2 eingebettet befindet sich die bekannte Jini-Mittelware 3, die über einen IP-Layer 12 die Verbindung zwischen den links angeordneten Schnittstellen 13 bis 16 zu den rechts angeordneten Schnittstellen 7 bis 11 erzeugt.

Beispielhaft handelt es sich bei den links dargestellten Schnittstellen 13 bis 16 zu einem lokalen Netzwerk um eine WLAN-Schnittstelle 13 (WLAN=wireless lokal area network= drahtloses lokales Netzwerk), um eine Infrarot-Schnittstelle 14, eine Ethernet-Schnittstelle 15 und eine Bluetooth-Schnittstelle 16. Der besondere Vorteil WLAN als sogenannten Transport Layer für Ad-hoc-Netzwerke einzusetzen liegt darin, dass die Geräte spontan nur in einem Funkradius zusammen kommen können und somit der örtliche Kontaktbereich zum Netz begrenzt ist.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Literaturverzeichnis

"Geistreiche Verbindungen, Intelligente Geräte in dezentralen Netzen", Claudia Piemont, c't 20/1998, Seite 198 - 202.

"JINI™ Architectural Overview", Technical White Paper, SUN microsystems, January 1999 (http://www.sun.com/jini/)

## Patentansprüche

1. Hardware-Modul (1) zur Einbindung eines elektronischen Gerätes in ein Ad-hoc-Netzwerk, **dadurch gekennzeichnet, dass** das Hardware-Modul (1) ein Mittel zum Betrieb einer Java RMI und Jini unterstützenden Java Virtuellen Maschine (3), mindestens ein Interface (7-11) zu einer Kommunikationsschnittstelle des elektronischen Gerätes, Mittel zur Generierung von Jini-Diensten (6) mit Interface-stubs (4) zur Hardware des elektronischen Gerätes und mindestens eine Schnittstelle (13-16) zu einem lokalen Netzwerk aufweist.

2. Hardware-Modul gemäß dem voranstehenden Anspruch 1, **dadurch gekennzeichnet, dass** ein Lookup-Service vorgesehen ist, der über einen Schalter am Hardware-Modul (1) aktiviert werden kann, um die Verbindung zu einem lokalen Netz aufzubauen.

3. Hardware-Modul gemäß einem der voranstehenden Ansprüche 1 bis 2, **dadurch gekennzeichnet, dass** das Interface (7-11) zur Kommunikationsschnittstelle des elektronischen Gerätes zumindest auch zu einer USB-Schnittstelle kompatibel ausgeführt ist.

4. Hardware-Modul gemäß einem der voranstehenden Ansprüche 1 bis 3, **dadurch gekennzeichnet, dass** das Interface (7-11) zur Kommunikationsschnittstelle des elektronischen Gerätes zumindest auch zu einer HAVi-Schnittstelle kompatibel ausgeführt ist.

5. Hardware-Modul gemäß einem der voranstehenden Ansprüche 1 bis 4, **dadurch gekennzeichnet, dass** das Interface (7-11) zur Kommunikationsschnittstelle des elektronischen Gerätes zumindest auch zu einer Instabus-Schnittstelle kompatibel ausgeführt ist.

6. Hardware-Modul gemäß einem der voranstehenden Ansprüche 1 bis 5, **dadurch gekennzeichnet, dass** das Interface (7-11) zur Kommunikationsschnittstelle des elektronischen Gerätes zumindest auch zum AT-Befehlssatz von Telekommunikationsendgeräten kompatibel ausgeführt ist.

7. Hardware-Modul gemäß einem der voranstehenden Ansprüche 1 bis 5, **dadurch gekennzeichnet, dass** das Interface (7-11) zur Kommunikationsschnittstelle des elektronischen Gerätes zumindest auch zum PCMCIA-Standard kompatibel ausgeführt ist.

8. Hardware-Modul gemäß einem der voranstehenden Ansprüche 1 bis 7, **dadurch gekennzeichnet, dass** das Interface (7-11) zur Kommunikationsschnittstelle des elektronischen Gerätes zumindest auch zu einer SIM-Karte kompatibel ausgeführt ist.

9. Hardware-Modul gemäß einem der voranstehenden Ansprüche 1 bis 8, **dadurch gekennzeichnet, dass** die Schnittstelle (13-16) zum lokalen Netzwerk drahtlos und/oder mit galvanischer Kopplung ausgeführt ist.

10. Hardware-Modul gemäß einem der voranstehenden Ansprüche 1 bis 9, **dadurch gekennzeichnet, dass** die Schnittstelle (13-16) zum lokalen Netzwerk zumindest auch zu einer IrDa-Schnittstelle kompatibel ausgeführt ist.

11. Hardware-Modul gemäß einem der voranstehenden Ansprüche 1 bis 10, **dadurch gekennzeichnet, dass** die Schnittstelle (13-16) zum lokalen Netzwerk zumindest auch zu einer Bluetooth-Schnittstelle kompatibel ausgeführt ist.

12. Hardware-Modul gemäß einem der voranstehenden Ansprüche 1 bis 11, **dadurch gekennzeichnet, dass** die Schnittstelle (13-16) zum lokalen Netzwerk zumindest auch zum IEEE 802.11 WLAN kompatibel ausgeführt ist.
